Europäisches Patentamt

European Patent Office

Office européen des brevets

(11) Publication number: **0 157 975**
**A2**

(12) **EUROPEAN PATENT APPLICATION**

(21) Application number: **84304489.2**

(22) Date of filing: **29.06.84**

(51) Int. Cl.⁴: **C 09 D 9/04**

(30) Priority: **12.03.84 US 588852**

(43) Date of publication of application:
**16.10.85 Bulletin 85/42**

(84) Designated Contracting States:
**AT BE CH DE FR GB IT LI LU NL SE**

(71) Applicant: **VARN PRODUCTS COMPANY, INC.**
**175 Route 208**
**Oakland, NJ 07436(US)**

(72) Inventor: **Donoghue, John T.**
**589 Edison Road**
**Trumble Connecticut 06611(US)**

(72) Inventor: **Ludwig, Robert P.**
**226 Oaklands Road**
**Maplewood, NJ 07040(US)**

(74) Representative: **Bankes, Stephen C. D. et al,**
**Baron & Warren 18 South End Kensington**
**London W8 5BU(GB)**

(54) **Method for removing printing ink from printing press component parts and cleaning compositions therefor.**

(57) A biodegradable cleaning composition for use in removing printing ink from printing press component parts and an ecological method for using that composition. The composition contains d-limonene, solvent, and surfactant. Optionally, trace amounts of a dye and a fragrance may be added.

EP 0 157 975 A2

Croydon Printing Company Ltd

**0157975**

## METHOD FOR REMOVING PRINTING INK FROM PRINTING PRESS COMPONENT PARTS AND CLEANING COMPOSITIONS THEREFOR

The present invention relates to a method for cleaning and a cleaning composition for use in the graphics art industry, and, more particularly, it relates to a biodegradable cleaning composition for use in removing printing ink, dust and other accumulated foreign particles from various printing press component parts and a method for using such a composition.

For years, presses and other machinery in the pressroom have been cleaned by use of standard solvents. Organic liquids such as gasoline, benzene, toluene, kerosene and alcohol are commonly used. Aqueous emulsion-type cleaners, however, also find application, mostly because they are non-flammable and do not cause a swelling of rubber surfaces as the organic solvents do. However, many types of presses use an oily ink composition which cannot adequately be removed with aqueous based washes. Accordingly, standard organic liquid solvents remain the favorite in most pressrooms. Still, such solvents are not generally biodegradable and, therefore, present ecological problems.

In certain types of printing operations, specially formulated cleaning compositions are desirable. For example, specially formulated compositions are used in cleaning and conditioning lithographic plates. See, for instance, U.S. Patent No. 4,399,243 to Dixit which discloses a cleaner and scratch remover composition for lithographic plates in the form of an emulsion of an aqueous phase in an oil phase. The oil phase includes a mineral spirit solvent, an oleophilic acid and a surfactant; while the aqueous phase includes a hydrophilic synthetic desensitizer, a gum desensitizer, a desensitizing agent, a nitrate salt, and water. See, also, U.S. Patent No. 4,028,281 to Millard which discloses a lithographic plate treating solution which is capable of degreasing and hydrophilically sensitizing the metal surface. The aqueous solution of Millard contains a wetting agent, an alkali metal silicate, a ferric chelate of ethylene diamine tetra acetic acid, and an ink solvent.

Such compositions also present a disposal problem in that they are not biodegradable. Accordingly, the need exists for a biodegradable cleaning composition for use in the graphics art industry.

That need is met by the present invention, which provides an ecological method for removing printing ink and accumulated foreign particles from printing press component parts and a biodegradable cleaning composition for use in that method. The composition comprises three major functional elements which are: d-limonene, solvent, and surfactant. The composition may optionally include trace amounts of additives such as a dye and a fragrance.

The major ingredient (although it may, in fact, not be present in the largest amount by volume) is d-limonene, which is completely biodegradable since it is derived from distilled orange rind oil. It is also a known citrus fragrance and a known soil and stain remover. See, e.g., U.S. Patent No. 4,336,152 to Like which discloses a disinfectant/cleaner composition exhibiting reduced eye irritancy potential containing d-limonene along with a quarternary ammonium compound, a non-ionic surfactant, a phosphate builder, an eye irritancy reducing compound, water, and optionally a lower aliphatic alcohol. See also Caskey U.S. Patent No. 4,362,638 which discloses a gelled laundry pre-spotter containing d-limonene along with a non-ionic surfactant, an isoparaffinic hydrocarbon solvent, n-butoxy propanol and water.

While d-limonene is a known soil and stain remover for laundry and personal care use, it is believed that it has not previously been used in cleaning compositions for removing printing ink and accumulated foreign particles from printing press component parts. And yet, it has been found to be particularly effective for that purpose, not only in terms of parts of relief and intaglio presses, but also for cleaning parts of planographic presses, such as lithographic plates, which are especially sensitive. Moreover, the residue from the cleaning operation may be ecologically disposed of since it is biodegradable at least to the extent of its d-limonene content.

The d-limonene content in the cleaning composition of the present invention may vary from 2% to 98% by volume. Use of amounts of d-limonene at the upper end of that range results in a cleaning composition which is essentially biodegradable. Even at the lower end of the range, the cleaning composition is at least partially biodegradable.

The solvent may be present in the cleaning composition anywhere from 0-98% by volume. If an organic solvent is used, that portion of the cleaning composition will most likely not be biodegradable, depending on the specific solvent chosen. That is, preferred organic solvents are aromatic and aliphatic hydrocarbons which are generally not biodegradable, but which aid in the removal of oily inks. When such organic solvents are used that part of the composition is non-biodegradable, but the remaining portion is biodegradable because of its d-limonene content.

When water is used as the solvent, the composition is essentially biodegradable. Thus, an emulsion prepared from 70-80% d-limonene, 20-30% water, and 0.5-2% surfactant is completely biodegradable and yet has been found to be a satisfactory wash for removal of even oily inks.

The surfactant component may be either a non-ionic, anionic or cationic surfactant. Preferred are the non-ionic surfactants which are very stable and which are good emulsifiers for oily inks and/or water-based inks. The surfactant may be present in the cleaning composition in the amount of 0.5-2% by volume.

The cleaning composition is used by applying it to printing press component parts, such as the blanket or rollers, to be cleaned. This may be done by wiping it on with a rag or by spraying it on the part. As a result of the solvent/cleansing action of the cleaning composition, a residue of used cleaning composition, removed ink, and accumulated foreign particles is formed. This may be removed by wiping with a rag or by rinsing into a liquid residue container. The residue may then be ecologically disposed of since it is, at least in part, biodegradable.

0157975

Accordingly, it is an object of the present invention to provide an ecological method for cleaning printing press component parts and to provide a biodegradable cleaning composition for use in cleaning such parts. These and other objects and advantages of the invention will become apparent from the following description and appended claims.

As mentioned, the d-limonene component is the main one in the present cleaning composition. It is derived from distilled orange rind oil and may be obtained in essentially pure form from The Coca-Cola Co. Foods Div., Houston, Texas; Sunkist Growers, Inc., Sherman Oakes, California, or other citrus products companies which produce it as a by-product. It may be present in the cleaning composition in volume amounts ranging from 2% to 98%. At the 98% level, with 2% surfactant making up the remainder, the composition is completely biodegradable. Likewise, if the solvent present in the composition is water, the cleaning composition is completely biodegradable.

In some instances, however, it is desirable to have present an aliphatic or aromatic hydrocarbon solvent. Preferred are mixtures of aliphatic and aromatic hydrocarbons such as naptha/napthol mixtures. These are well know mineral spirits and may be purchased from, for example, Union Oil Co. of California, Los Angeles, California; Texaco, Inc., White Plains, New York; and Exxon Co., Houston, Texas. Other mineral spirits may also be used as the organic solvent. Whether the solvent is aqueous or organic, it may be present in a volume range of 0-98%.

Also present is a surfactant in the range of 0.5-2% by volume. Preferably the surfactant is a non-ionic. Surfactants of this type include nonyl phenol polyethoxylates such as Igepal CO-630 from GAF Corporation; isooctyl phenoxy polyethoxy ethanols such as the Triton compounds of Rohm and Haas Company; non-ionic N-substituted fatty acid amides having polyoxythylene substituents such as the Ethonid surfactants of Armour; mixtures of sodium salts of sulfated fatty alcohols, including Duponal surfactants of DuPont Company; modified alkanol amides such as Richamide from the Richardson Company; and benzene sulfonate non-ionic surfactants such as isopropylamine dodecyl benzene sulfonate.

Optional ingredients include trace amounts of a dye such as Oil Yellow NB from DuPont Co. of Wilmington, Delaware or other known dyes; a fragrance such as Synfleur/M-1117 from Synfleur Div. of Bell Flavors & Fragrances, Inc. of Paramus, NJ or other fragrances. Other conventional trace additives may also be added.

The result is a liquid cleaning composition particularly adapted for removal of printing ink and accumulated foreign particles from printing press component parts. It may be used on rubber or synthetic blankets and rollers, on metal rollers, and on other printing press component parts that require ink removal. Following use, the residue of used cleaning composition, removed ink, and accumulated foreign particles may be ecologically disposed of since the cleaning composition is, at least in part, biodegradable.

The following nonlimiting Examples are illustrative of the practice of the invention.

EXAMPLE I

| Component | Volume % |
|---|---|
| Super Hi Flash Naptha[1] | 50.000 |
| Napthol Spirits[2] | 24.300 |
| Nonyl phenol polyethoxylate surfactant[3] | 0.500 |
| d-limonene | 25.000 |
| Synfleur/M-1117 fragrance[4] | 0.150 |
| Oil Yellow NB dye[5] | 0.005 |
| | 100.000 |

1) Aromatic hydrocarbon solvent blend from Union Oil Co.

2) Aliphatic hydrocarbon solvent blend from Union Oil Co.

3) Igepal CO-630 from GAF Corp, New York, New York.

4) From Synfleur Div. of Bell Flavors & Fragrances, Inc. of Paramus, NJ.

5) From DuPont Co., Wilmington, Delaware.

The composition of the example was tested for its ability to remove oily printing ink and accumulated foreign particles from printing press component parts by wiping it on selected parts with a rag, wiping off the residue also with a rag, and inspecting the part for degree of ink removal. It was found particularly effective for that purpose. It was also evaluated for its degree of biodegradability and was found to be 25% biodegradable due to the 25% d-limonene content.

Compositions containing 98% d-limonene and 2% surfactant have been found to be 100% biodegradable.

Those containing 10% d-limonene, 1% surfactant and 89% organic solvent have been found to be around 10% biodegradable.

## EXAMPLE II

| Component | Volume % |
|---|---|
| d-limonene | 74.00 |
| Water | 24.00 |
| Nony phenol polyethoxylate surfactant[1] | 2.00 |

1)   Igepal CO-630 from GAF Corp, New York, New York.

An emulsion of the composition of the example was prepared by mixing the components together and vigorously shaking before applying the composition to selected printing press component parts.  As in Example I, a rag was used to wipe off the residue so that visual inspection could be made for the degree of ink and foreign particle removal.  The composition of this Example was found to be particularly effective for removal of aqueous based inks and was found to be satisfactory for removal of most oily printing ink.  It was also evaluated for its degree of biodegradability and was found to be 100% biodegradable.  Finally, as should be apparent, since no organic solvents are involved, there were no problems caused by fumes from organic solvents.

While the composition and method herein described constitute preferred embodiments of the invention, it is to be understood that the invention is not limited to these precise embodiments, and that changes may be made in

0157975

either without departing from the scope of the invention, which is defined in the appended claims.

CLAIMS

1. A method for cleaning printing ink and accumulated foreign particles from printing press component parts characterised by the steps of applying a cleaning composition containing d-limonene to said printing press component parts to form a residue of used cleaning composition, removed ink, and accumulated foreign particles removing said residue from said printing press component parts, and disposing of said residue whereby at least a portion of said residue is biodegradable.

2. A method according to claim 1 characterised in that said cleaning composition comprises by volume 2-98% d-limonene, 0-98% solvent and 0.5-2% surfactant.

3. A method according to claim 1 or claim 2 characterised in that a dye and a fragrance are added in trace amounts.

4. A method according to any preceding claim characterised in that said solvent is selected from aromatic hydrocarbons, aliphatic hydrocarbons, and mixtures thereof.

5. A method according to any one of claims 1 to 3 characterised in that said solvent is water.

6. A method according to any preceding claim characterised in that said surfactant is a non-ionic surfactant.

7. A method according to claim 6 characterised in that said surfactant is selected from nonyl phenol polyethoxylate, isooctyl phenoxy polyethoxy ethanol, fatty acid amides, sulfated fatty alcohols, modified alkanol amides, and benzene sulfonates.

-11-

8.   A method according to any preceding claim characterised in that said printing press component parts are parts of relief presses, parts of intaglio presses, or parts of planographic presses.

9.   A method according to claim 8 characterised in that said printing press component parts are the blanket or the rollers of a press.

10.   A cleaning composition for removing ink and accumulated foreign particles from printing press component parts characterised by the following composition by volume:

> 2-98% d-limonene;
>
> 0-98% solvent; and
>
> 0.5-2% surfactant.

11.   A cleaning composition according to claim 10 characterised in that said solvent is water.

12.   A cleaning composition according to claim 10 characterised in that said solvent is selected from aromatic hydrocarbons, aliphatic hydrocarbons, and mixtures thereof.

13.   A cleaning composition according to any one of claims 10 to 12 further including trace amounts of a dye and a fragrance.

14.   A cleaning composition according to any one of claims 10 to 13 characterised in that said surfactant is selected from nonyl phenol polyethoxylate, isooctyl phenoxy polyethoxy ethanol, fatty acid amides, sulfated fatty alcohols, modified alkanol amides, and benzene sulfonates.

15.   A cleaning composition according to claim 14 characterised in that said solvent is a mixture of naptha and napthol mineral spirits, and said surfactant is nonyl phenol polyehtoxylate.

16. A cleaning composition for removing ink and accumulated foreign particles from printing press component parts, characterised by the following composition by volume:

       50% naptha;

       24.3% napthol spirits;

       0.5% nonyl phenol polyethoxylate;

       25% d-limonene;

       0.15% fragrance; and

       0.005% dye.

17. A cleaning composition for removing ink and accumulated foreign particles from printing press component parts, characterised by the following composition by volume:

       70-80% d-limonene;

       20-30% water, and

       0.5-2% surfactant.